# EUROPEAN PATENT SPECIFICATION

(11) **EP 2 448 651 B1**
(45) Date of publication and mention of the grant of the patent: **03.12.2014**
(21) Application number: 10794482.9
(22) Date of filing: 25.06.2010
(51) Int. Cl.: B01D 45/08, B01D 50/00, B01D 53/02, B01D 51/02, B01D 53/64, C02F 1/00

(54) **PROCESS AND SYSTEM FOR SEPARATING FINELY AEROSOLIZED ELEMENTAL MERCURY FROM GASEOUS STREAMS**
VERFAHREN UND SYSTEM ZUR ABSCHEIDUNG FEIN AEROSOLISIERTEN ELEMENTAREN QUECKSILBERS AUS GASSTRÖMEN
PROCÉDÉ ET SYSTÈME POUR SÉPARER DU MERCURE ÉLÉMENTAIRE AÉROSOLISÉ DE FLUX GAZEUX

(30) Priority: 30.06.2009 US 459389
(43) Date of publication of application: 09.05.2012
(73) Proprietor: Alper, Hal, Flowery Branch, GA 30542 (US)
(72) Inventor: Alper, Hal, Flowery Branch, GA 30542 (US)
(74) Representative: REHBERG HÜPPE + PARTNER
(86) International application number: PCT/US2010/001824
(87) International publication number: WO 2011/002493

(56) References cited:
- WO-A2-2008/076314
- CH-A- 340 483
- US-A- 3 627 191
- US-A- 4 925 463
- US-A- 5 409 522
- US-B2- 6 805 727

## Description

### FIELD OF INVENTION

This invention relates generally to methods and apparatus for removing pernicious contaminants from gaseous systems to preclude discharge of the contaminants into the surrounding environment, and more specifically relates to methods and devices for removing from a gaseous stream elemental mercury which is dispersed therein as a fine aerosol.

### BACKGROUND OF INVENTION

In the course of practicing a wide variety of commercially important industrial processes, gaseous process streams (or more generally "gaseous systems") are produced which are contaminated with pernicious quantities of mercury. The mercury contaminants have proved to be particularly difficult to remove or reduce to acceptable levels. One of the most pernicious forms of mercury pollution is finely aerosolized elemental mercury. This form of mercury is generated by coal-fired power generation and is present in natural gas. In the U.S., coal-fired power plants are the largest source of man-made mercury emissions to the air, accounting for approximately 40% of all mercury emissions. Under current circumstances, mercury is adsorbed on the aerosolized soot from coal burning. This soot eventually settles and the mercury adsorbed on the carbon is converted to methyl mercury, dimethyl mercury, and other forms, which accumulate in the food chain. Alternatively, techniques have been developed which will cause the carbonaceous soot to auto-ignite and convert to CO₂ and H₂O. When this occurs, finely aerosolized elemental mercury is produced. The mechanism for conversion of elemental mercury to methyl mercury and other forms is not well understood but is most certainly microbially mediated. It is estimated that 2000 tons of mercury is generated this way annually. Elemental mercury also occurs in natural gas in concentrations up to hundreds of micrograms per Nm³. This is a significant account considering that a typical plant will process millions of Nm³ per day.

Currently there is no technology that is considered optimal for remediation of the mercury in its elemental aerosolized form. Although coalescers, brominated adsorbents, and other methods have been used, they either lack effectiveness or have significant negative aspects such as generation of large amounts of mercury-polluted material to be land-filled. Coalescers lack effectiveness due to the extremely small size and high surface tension of the droplets and also due to the lack of affinity for mercury of typical coalescer materials. Also known is a process based on photochemical oxidation. This has chiefly been known for use in treating flue gas wherein ultraviolet (UV) light is introduced into the flue gas, to convert elemental mercury to an oxidized form (i.e. mercuric oxide, mercurous sulfate, and mercurous chloride). Once in the oxidized form, mercury can be collected in existing air pollution control devices such as wet SO₂ scrubbers, electrostatic precipitators, and baghouses (fabric filters).

None of the foregoing techniques, however, have been fully successful in treating gaseous systems of the type with which the present invention is concerned. In addition to human and ecological effects, mercury in this elemental finely aerosolized form compromises the integrity of the steel and iron in the plants and pipeline for processing and transporting the gas, sometimes resulting in catastrophic failure and explosions or uncontrolled releases. It would be most desirable to capture and coalesce the droplets of mercury and to remove the mercury from these gaseous streams in its pure and elemental form, thus eliminating release and/or production of great quantities of mercury-polluted adsorbent.

A method and a system for removing mercury from an aqueous system in three filtration stages are known from WO 2008/076314 A2. The mercury is present as colloids, ions and/or organically bound compounds. The third filtration stage includes an electroless or voltaically actuated means for reducing and collecting residual elemental mercury and/or residual colloidal and ionic mercury.

### SUMMARY OF INVENTION

The problem associated with capturing finely aerosolized elemental mercury is primarily one of overcoming the surface tension of the aerosolized droplet in order to allow the liquid mercury to wet out on a surface. Secondarily, the coalesced mercury must be prevented from re-aerosolizing off the substrate. One way to achieve this is by exploiting the contact angle of the droplet with a given interface.

Now in accordance with the present invention, a method (and apparatus for practicing the method) are provided for separating droplets of finely aerosolized elemental mercury from a gaseous stream in which the droplets are dispersed. In the method a metallic capillary surface is contacted with the gaseous stream, causing the aerosolized droplets to deposit on the capillary surface and by capillary action to coalesce with other of such droplets to form increasingly large drops of mercury. The surface is oriented to allow the mercury drops to flow by gravitational forces and capillary action to the lowermost portions of the surface or an extension of same where they accumulate, and are then collected at a suitable vessel or the like, e.g. by simply dropping into the vessel.

The present invention exploits the above phenomena by employing a capillary surface-bearing substrate, comprised of finely braided strands of copper wire (e.g. approximately 40-gauge, 3 mil diameter, 192 wires/ strand) which has an integral surface deposition of a precious metal of gold. Gold has a demonstrated affinity for mercury. Generally when gold is deposited on copper, an intermediate metal such as nickel is first plated on the copper to act as a barrier to prevent inter-metallic formation of the copper and gold. In the present invention, however, this intermetallic formation is desirable as it results in a highly stable substantially unitary structure in the strands of the braid, which resist deterioration from the thermal cycling imposed by typical environments in which the invention is employed. In contrast, were a barrier layer of nickel present between the copper and gold, peeling or undercutting of the gold surface would over time become a serious problem.

The braided materials used in the invention are of a type that has been well known in the prior art as "solder wicks" because of their use to remove a solder connection. Such solder wicks are made of metal strands braided to form narrow interstices between the individual strands and to thereby provide a capillary surface at the wick's exterior. To form the wick the fine metal strands are typically braided together in the form of a tube, which is then flattened to make a braided ribbon. In a braided ribbon, the strands all extend in the longitudinal direction along the tube. The individual strands are in rather close engagement, yielding a ribbon with a limited volume between strands within which solder may be drawn. In one type of solder operation, the wick is placed on the solder connection and the connection is heated through the wick with a soldering iron. The solder melts and is drawn up onto the wick by capillary forces. Such solder wicks are generally made of copper wire.

In U.S. patent No. 3,627,191 further details of such a solder wick are discussed, such as that the wick disclosed therein comprises a braid of strands of 40-gauge copper wire and the strands are in groups of four. The wick is braided from a machine having 16 heads so that the wick is 64 strands thick with 23 tucks 27 per inch. Other grades of wire and braiding patterns can also be used, e.g., 96 strands of 44 gauge can be braided in 16 groups of six strands, etc. Solder wicks have also been proposed for production by other than braiding. For example, U.S. Patent No. 4,416,408 mentions the use of an open-mesh structure prepared by "weaving, stranding, braiding, knitting or crochetting", the preferred process therein involving the use of a knitting machine, which results in the aforementioned lower wire diameter limit of 0.1 mm. Regardless, the fundamental requirement is that the wick have a capillary surface capable of wicking the molten solder, and braided wicks have been found most suitable for this function. Although various open mesh structures such as discussed above are useable in the present invention if they possess an adequate capillary surface, the braided wicks are the preferred material for use in the present invention,

In the present invention, the braided wire is formed of copper and is gold plated. The flattened ribbon-shaped wick can be wrapped around a filter or a metal core in the preferred form of a tube, with the wire strands all extending in the longitudinal direction along the tube, and the ribbon being in one or multiple layers so as to achieve the desired degree of filtration efficiency. The metal tube has porous walls, e.g. by being perforated, and the braid, despite the contact made by the mercury droplets with the capillary surface, is relatively pervious to flow of a gas stream through them so that the gas stream in which the mercury droplets are aerosolized can be flowed from the tube to the braid or from the braid to the tube, to enable contacting of the gold plated metallic capillary surface with the aerosolized mercury droplets. Such contact causes the droplets to deposit on the capillary surface and by capillary action to coalesce with other of said droplets to form increasingly large drops of mercury. When wound in this way around a core, high removal efficiency of aerosol mercury is achieved at very low differential pressures as the gas stream passes through the wound core. For a three-layer thickness of braid around a steel core, differential pressure is only between 1 to 3 psi at a gas flow rate of 600 million ft³ per day. The braided structure of the substrate results in interstitial areas of extreme contact angle (less than 45 degrees), which is able to entrap the aerosol droplets. The combination of this contact angle (hereinafter defined), along with the affinity of gold for mercury results in the de-aerosolization of the droplets and wetting out on the substrate. When sufficient mercury has accumulated, so as to act like a bulk phase material, the surface tension of the liquid mercury will cause it to capillary flow along the axis of winding of the braid. This effect is exploited in combination with gravity to cause the captured liquid mercury to capillary down the filter and along a braided extension to a recovery point.

In an apparatus based on the foregoing method, a filtration system is provided for separating droplets of finely aerosolized elemental mercury from a gaseous stream in which the droplets are dispersed. The apparatus includes a metallic capillary surface and means for contacting metallic capillary surface with the gaseous stream, causing the droplets to deposit on the surface and by capillary action to coalesce with other of the droplets to form increasingly large drops of mercury. The said capillary surface is oriented to allow the mercury drops to flow by gravitational forces and capillary action to the lowermost portion of the surface where it accumulates; and means are provided for collecting the accumulating mercury thereby separated from the gas stream. The capillary surface is preferably defined at the surface of a wick made of braided copper strands; and the strands are gold plated.

In a further aspect of the apparatus of the invention, a filtration system is provided for separating droplets of finely aerosolized elemental mercury from a gaseous stream in which the droplets are dispersed. The system includes a generally enclosed tank having an inlet for receiving the gaseous stream and an outlet for discharging the gaseous stream after the mercury has been removed. One or more filters are positioned in the tank, which filters include a perforated wall tube wound with a substrate formed from a wick made of metal strands braided to form narrow interstices between the individual strands which thereby provide a capillary surface at the wick's exterior. Means are provided for flowing the gas stream entered into the tank through the perforated wall of the tube and the wound substrate to effect contact of the metallic capillary surface of the substrate with the gaseous stream, causing the droplets to deposit on the capillary surface and by capillary action to coalesce with other of said droplets to form increasingly large drops of mercury. Means are provided for passing the gas stream having contacted the capillary surface to the gas discharge outlet. The tube and capillary surface are oriented to allow the mercury drops to flow by gravitational forces and capillary action to the gravitationally lowermost portion of said surface where the mercury accumulates; and means are provided in the system for receiving and collecting the accumulating mercury thereby separated from the gas stream.

Since depending on its source, the gas stream treated by the invention may include undesirable hydrocarbons and oily organic compounds dispersed as minute aerosolized particles or mists in the gaseous media, systems and methods based on the invention may further include means to prefilter the gaseous stream before it is contacted with the capillary surface, to remove the dispersed hydrocarbons and oily organic compounds.

### BRIEF DESCRIPTION OF DRAWINGS

The invention is diagrammatically illustrated by way of example in the drawings appended hereto in which:
FIGURE 1 is a schematic longitudinal cross-section showing a filtering system utilizing a metal capillary ("MC") filter in accordance with the invention to remove and collect finely aerosolized mercury, the depiction showing the MC filter in an outside-in gas stream flow arrangement;
FIGURE 2 is a schematic longitudinal cross-section similar to Figure 1, except that the depiction shows the MC filter in an inside-out flow arrangement;
FIGURE 3 is an enlarged schematic cross-section of the mercury removal reservoir of Figures 1 and 2, showing the lower portions of the capillary braid delivering the collected mercury to the reservoir;
FIGURE 4 is a schematic elevational view of a portion of the MC filter showing the core of the filter and portions of the braid which is wound on the core;
FIGURE 4A is an enlarged view of a portion of the braid in Figure 4;
FIGURE 5 is a schematic showing of the capillary surface of the braid in the MC filters of the prior Figures and together with adjacent FIGURE 5A shows the progressive change in the contact angles at the mercury-capillary surface interface as the coalescing drops proceed downwardly on the braid;
FIGURE 6 is a schematic longitudinal cross-section showing an oleophilic prefilter which may be used in a gas filtering system upstream of the metal capillary ("MC") filter in order to remove organic and other contaminants that may be present in the gas flow, prior to the flow being acted upon by the MC filter or filters, the depiction showing the oleophilac prefilter in an outside-in flow arrangement;
FIGURE 7 is a schematic longitudinal cross-section showing a two stage mercury removal filtering system in which the first stage is an oleophilic prefilter as in Figure 6, and the second stage is a metal capillary ("MC") filter for removing and collecting finely aerosolized mercury, the depiction showing the MC filter in an inside-out flow arrangement;
FIGURE 8 is a schematic elevational view, partly sectioned, which shows a composite filter incorporating the two stages used in the Figure 7 embodiment, the oleophilic prefilter being coaxial with but outside of the MC filter, and with the gas stream flow proceeding radially inward toward the composite filter axis; and
FIGURE 9 is a schematic elevational view, partly sectioned, which shows a composite filter incorporating the two stages used in the Figure 7 embodiment, but differing from the Figure 8 embodiment in that the oleophilic prefilter is coaxial with but inside of the MC filter, and with the gas flow proceeding outwardly from the axis of the composite filter.

### DESCRIPTION OF PREFERRED EMBODIMENT

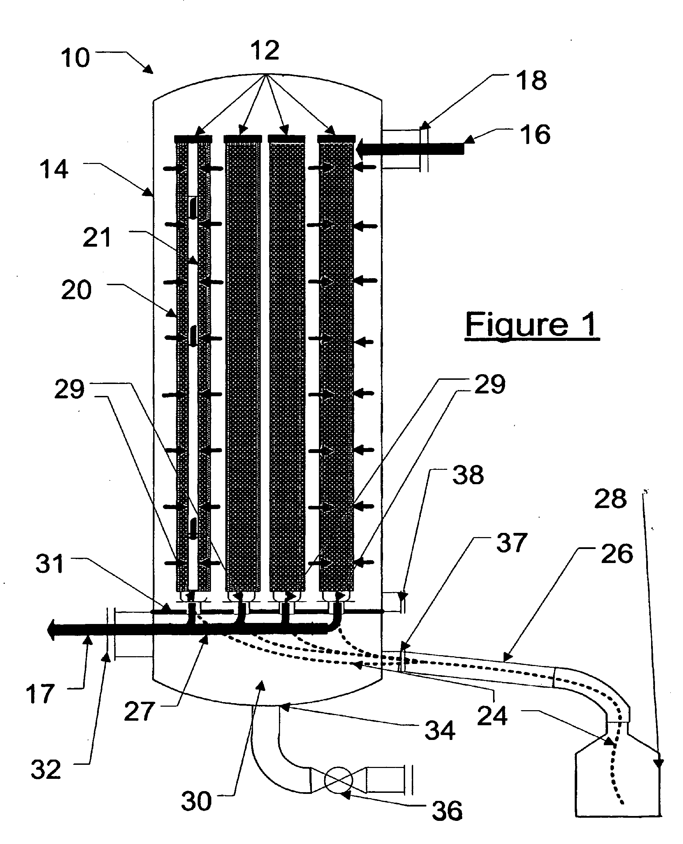

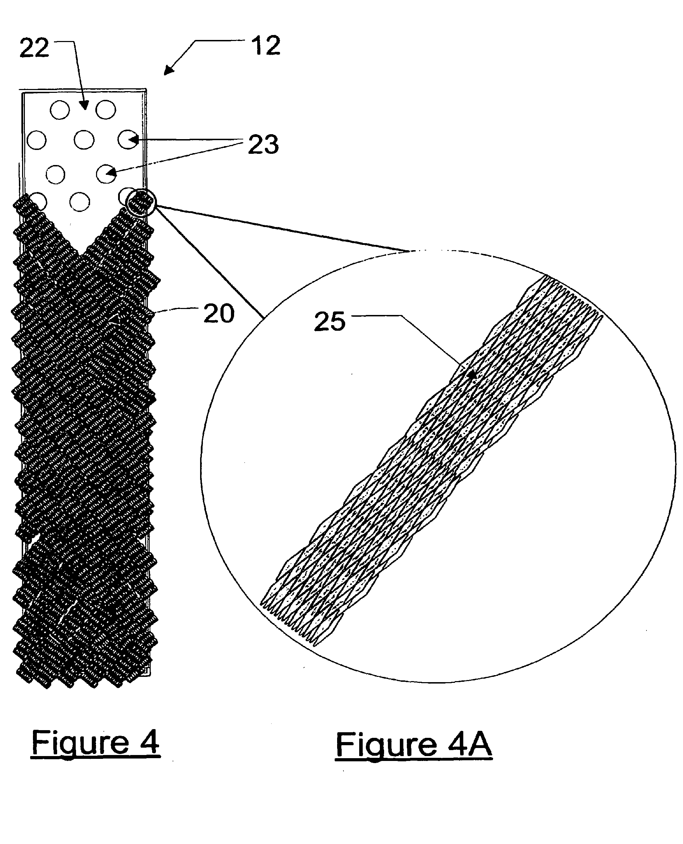

Referring to the schematic block diagram of Figure 1, a filtering system 10 is shown which utilizes metal capillary ("MC") filters 12 in accordance with the invention to remove and collect finely aerosolized mercury. In system 10 four identical MC filters 12 are mounted in a tank 14 to function in parallel in treating a gas flow stream 16 provided to tank 14 via inlet 18. The actual number of MC filters 12 can be greater or smaller than the exemplary four shown. The gas flow in tank 14 enters into each of the MC filters by passing through the capillary surface presented by the metallic braid 20 which in the MC filter is wound upon a stainless steel core or tube 21, the walls of which, as seen in Figure 4, are perforated by openings 23. The braided materials used, as discussed above, are of the type that has been well known in the prior art as "solder wicks" because of their previous use to remove solder connections. Such solder wicks are made of metal strands braided to form narrow interstices between the individual strands and to thereby provide a capillary surface at the wick's exterior. To form the wick the metal strands are typically braided together in the form of a tube, which is then flattened to make a braided ribbon 25 as seen in Figure 4A. The wick discussed In U.S. patent No. 3,627,191 comprises a braid of strands of copper wire, which unlike the present braid is overcoated with flux. In this prior patent, the wire is 40-gauge and the strands are in groups of four. The wick is braided from a machine having 16 heads so that the wick is 64 strands thick with 23 tucks 27 per inch. Such a wick (minus the flux) is suitable for use in the present invention, preferably when modified by a gold plating , but other grades of wire, and braiding patterns can also be used, e.g., 96 strands of 44 gauge can be braided in 16 groups of six strands, etc. The fundamental requirement is that the wick have a capillary surface capable of wicking the mercury that pursuant to the present invention is deposited on the capillary surface.

In the present invention, the preferred braided wire 20 is of copper and gold plated and the flattened ribbon-shaped wick is wrapped around a filter or the porous wall metal tube 21 in one or multiple layers so as to achieve the desired degree of filtration efficiency. When wound in this way, high removal efficiency of aerosol mercury is achieved at very low differential pressures. For a three layer thickness of braid around a steel tube with wall perforations as in Figure 4, differential pressure is only between 1 to 3 PSI at a gas stream flow rate of 600 million ft³ per day.

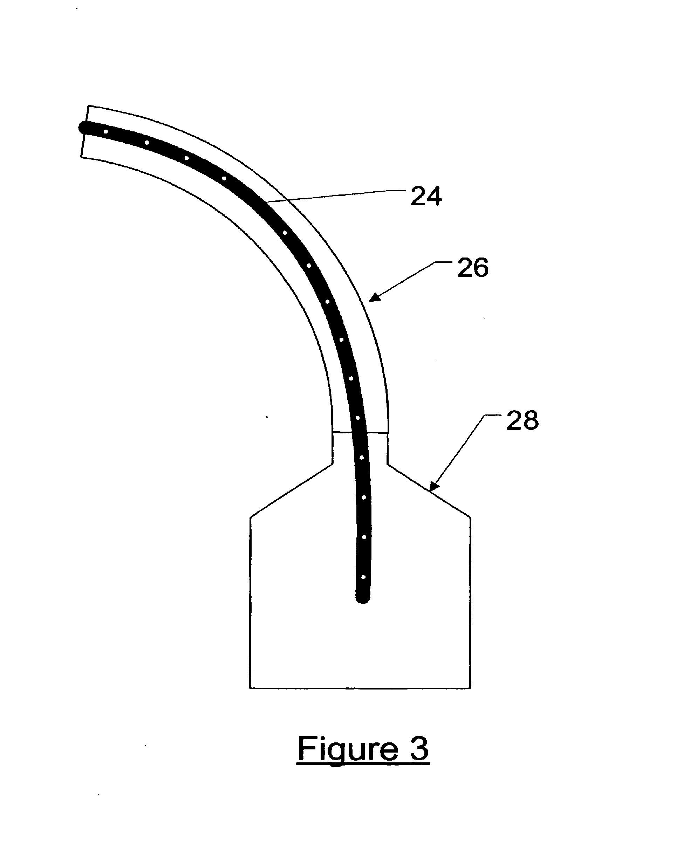

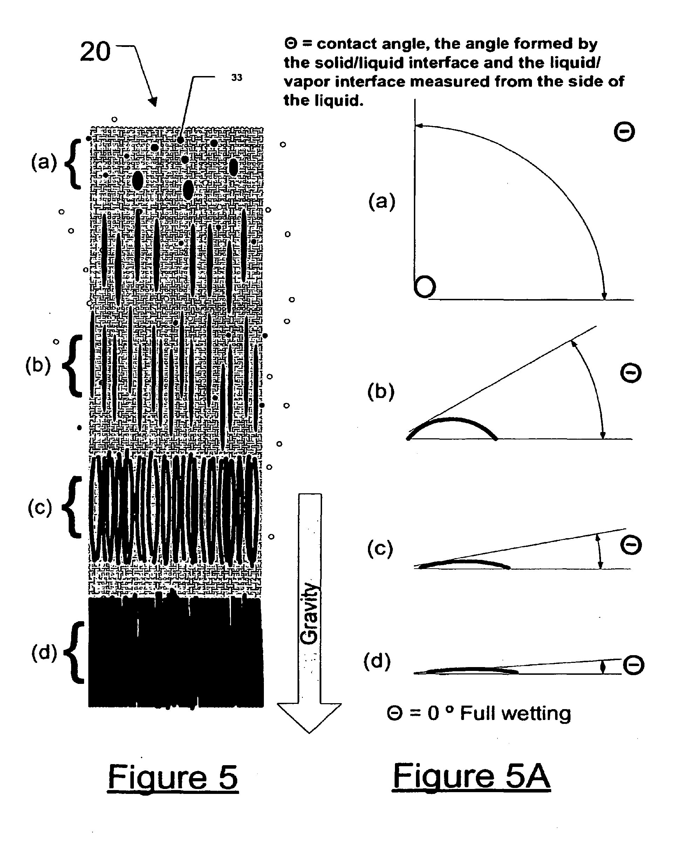

Figure 5 shows how the aerosolized mercury droplets 33 in the gas stream deposit on the capillary surface of braid 20 and then gradually coalesce and increasingly wet the said surface as they advance downwardly in the sense of the Figure, driven by capillary action and aided by gravity. Figure 5A to the right of Figure 5 graphically depicts the approximate change in contact angle as the collected mercury droplets coalesce and advance downwardly in Figure 5, where the well-known parameter "contact angle" is defined here as the angle formed by the solid/liquid interface measured from the side of the liquid. Four approximate regions (a), (b), (c), and (d) are shown in Figure 5 in the descending direction on braid 20. In Figure 5A approximate contact angles are depicted for these four regions, The braided structure of the substrate thus results in interstitial areas of an extreme contact angle (greater than 45 degrees-as seen at region (a) at the top of Figure 5) which is able to entrap the aerosol droplets 33. The combination of this contact angle, along with the affinity of gold for mercury results in the de-aerosolization of the droplets and increasing wetting out of the substrate surface as shown by the sequence of contact angles in regions (b), (c), and (d), proceeding downwardly in Figures 5 and 5A. When sufficient mercury has accumulated, so as to act like a bulk phase material, the surface tension of the liquid mercury and the gravitational influence of the vertical orientation of the MC filters will cause the mercury to capillary flow along the axis of winding of the braid. This effect is exploited to cause the captured liquid mercury to capillary down the filter and along the braided extensions 24 (Figure 1) to a recovery point, i.e. in this instance to the mercury removal reservoir 28. The enlarged view of Figure 3 shows the several braid extensions 24 ,which at this point can be intertwined together, exit the tank through port 37 (Fig. 1), pass through duct 26 and enter the mercury removal reservoir 28, where the mercury is collected as it wicks down the braids and drops from the bottom ends thereof.

The gas stream 17 from which the aerosolized mercury has been removed exits the core interiors 21 of MC filters at outlets 29 into plenum 27, which is separated from the rest of tank 14 by a plate 31, which extends across the tank, and then exits tank 14 via outlet 32. Since some condensation will tend to occur in the plenum 27, the bottom of the plenum defines a sump 30 for which a drain outlet 34 and valve 36 are provided. In addition further connection ports to the tank 14, such as at 38, enable gauges or other instrumentation to be connected as desired to the tank 14 or to one or more of the MC filters 12 or portions thereof.

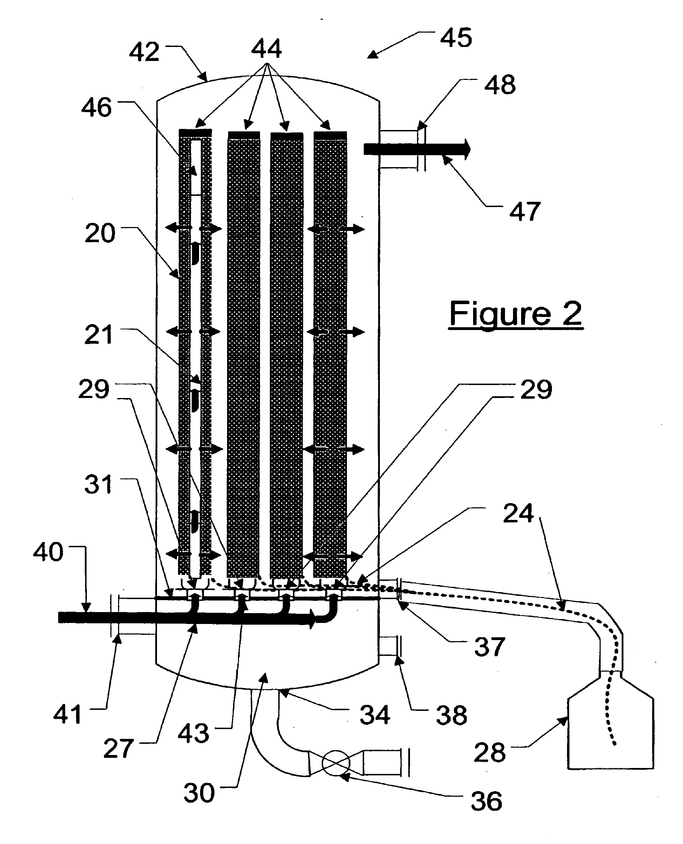

In Figure 1 the depiction shows the MC filter in an outside-in flow arrangement. Figure 2 shows the MC filters being used in inside-out flow arrangements. Thus in the filtration system 45 of Figure 2 (where identical elements are identified by corresponding reference numerals) the stream 40 enters the plenum 27 via inlet 41 at the bottom of tank 42, and passes into MC filters 44 via the hollow axial interiors 46 of cores 21. Then after passing through the openings of the perforated walls of cores 21 the stream 40 passes to the metallic braid 20 wound upon the core 46 of each MC filter 44, where the same action occurs as discussed in connection with Figure 1, with the depositing mercury droplets again coalescing and advancing by capillary action aided by gravity, to reach the mercury removal reservoir 28. The gas stream 47 with the mercury removed exits tank 42 via outlet 48.

While a principal concern of the present invention is the removal of finely aerosolized mercury, the gaseous streams treated by the invention in many instances may additionally include undesirable organic compounds such as hydrocarbons and various oily compounds dispersed as minute aerosolized particles or mists in the gaseous media. As taught, however, in the invention of my U.S. patent No. 6,805,727 the disclosure of which is hereby incorporated by reference, the compositions disclosed in my U.S. Pat. Nos. 5,437,793; 5,698,139; 5,837,146; and 5,961,823 (all of which disclosures are hereby incorporated by reference), have extremely strong affinities for the aforementioned mist contaminants and other dispersed and/or aerosol particles in air and gas streams; and that when such streams containing these contaminant particles are passed through fluid-pervious filtration media incorporating these inventive compositions, the mentioned contaminants are immobilized at the media, as a result of which concentration levels of the contaminants in the stream filtrate may be reduced to very low values, in some instances below detectable limits in a single pass.

The fluid-pervious filtration media in my U.S. patent No. 6,805,727 is treated with an absorbtion composition cured in situ at the media, the composition comprising a homogeneous thermal reaction product of an oil component selected from the group consisting of glycerides, fatty acids, alkenes, and alkynes, and a methacrylate or acrylate polymer component. Filter configurations incorporating the said may be based on various air or gas stream permeable substrates, such as shredded, spun or otherwise configured polypropylene, polyethylene or shredded or spun cellulose, or polyester cellulose which substrates are infused or otherwise treated with the absorbent compositions, which are then cured to produce the surface modified filter. Similarly the said absorbent compositions can be incorporated into or upon other filtering substrates and media, such as paper, including compressed pulp materials, particulate porous foamed plastics, fiberglass, mineral particulates such as perlite and vermiculite, and particulate, fibrous or porous ceramic media. The resulting substrate filter may be used independently to treat an air or other gas stream from which contaminating mists or other dispersed or suspended particles are to be removed, or can be used (especially for removal of mists) in conjunction with a conventional filter, as for example by being placed in front of (i.e., in series with) the conventional filter through which the air or gas stream passes.

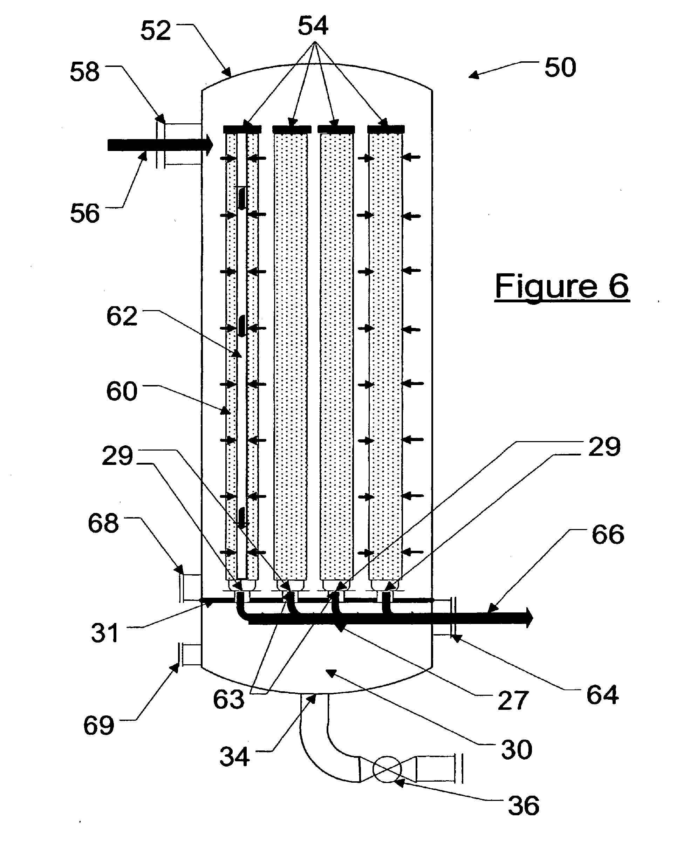

The filters of my U.S. patent No. 6,805,727 accordingly can find use as a prefiltration stage, which cooperates with a downstream mercury removal filtration stage. FIGURE 6 is a schematic longitudinal cross-section showing a prefiltration stage, which shall herein be referred to as an "oleophilic prefilter", which makes use of the foregoing filtration media. The oleophilic prefilter system 50, which thus may be used in a gas filtering system upstream of the metal capillary ("MC") filter in order to remove aerosolized and particulate organic and other contaminants that may be present in the gas flow prior to the flow being acted upon by the MC filter or filters, is shown in an outside-in flow arrangement. The oleophilic prefilter system 50 has an overall similarity in arrangement of its components to the devices of Figures 1 through 5. Thus a prefiltration tank 52 is provided in which are mounted in parallel feed fashion four oleophilic filters 54 which are arranged for outside-inside stream flow. Stream 56 enters the tank 52 through inlet 58, and then passes into each hollow core filter 54 via the oleophilic filtration media 60, which is positioned about the cores 62. This media 60 is in accord with that described in my aforementioned 6,805,727 patent, and thus serves to remove the said aerosolized organics from the gas stream. The gas stream from the several in-parallel filters then exits the axial passages of cores 62 via the bottom core outlets 63 and enters the plenum 27 from which the stream 66 is discharged at outlet 64. Corresponding reference numerals, such as drain 34 and valve 36, identify additional elements in the Figure, which are functionally the same as in prior Figures. Two extra ports 68 and 69 are shown, the first connecting to the tank 52 interior above plate 31, and the second to plenum 27 below plate 31. These ports can be used with instrumentation or the like for measuring desired parameters in the spaces with which the ports communicate.

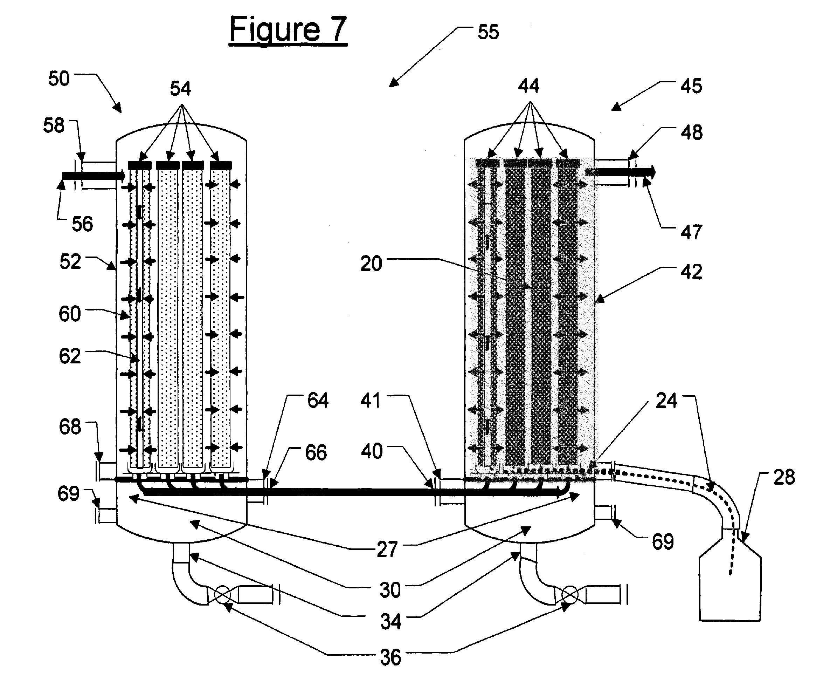

Figure 7 is a schematic longitudinal cross-section showing a two stage mercury removal filtering system 55 in which the first stage is an oleophilic prefilter system 50 as in Figure 6, and the second stage is an MC filter system 45 as in Figure 2 for removing and collecting finely aerosolized mercury. Corresponding elements of the filter systems 50 and 45 are identified here by corresponding reference numerals of Figures 6 and 2. The output flow 66 from outlet 64 of prefilter system 50 is schematically shown entering MC filter system 45 as stream 40. The physical duct between outlet 64 and inlet 41 is not shown, but can take any convenient form such as a pipe or the like. The oleophilic filter is thus disposed upstream of the MC filter so that the former acts as a prefilter for the latter.

As has been discussed in the "Background of Invention" section herein, the present invention is *inter alia* applicable to remediation of various flue and exhaust gases, such as those produced in coal-fired power generation. In such instances (as well as in other environments in which exhaust gases result from combustion of high energy carbon-based fuels), mercury droplets may not be the only pernicious aerosolized droplets. Of additional concern are finely aerosolized organic compounds such as hydrocarbons in the C6 to C13 range, which encompass various diesel and gasoline components. In a further aspect of the present invention, it has been found that these aerosolized organic droplets can be coalesced with great efficacy by the use of the invention. Thus it has been found that use of a system such as that illustrated in Figure 7 and described in the preceding paragraph, can effect coalescence of the mentioned organic droplets conjunctively with coalescence of the mercury droplets. The coalescing organics can thus be collected primarily in prefilter system 50 at the sump 30 of prefiltration tank 52, while the mercury is coalesced primarily in the mercury filtration tank 42 oft the MC filter system 45, where it is then collected at an external mercury collection vessel 28. It will be further appreciated that the prefilter system 50 may also act to remove small portions of the dispersed mercury along with the various condensates that collect at sump 30. These mercury components can, if sufficient in quantities to warrant such action, be separated from the discharge at drain 34 of tank 52 by conventional chemical or physical methods. Alternatively, portions of the condensate can be converted to a vaporous form and recycled through MC filter 45 to recover such additional mercury.

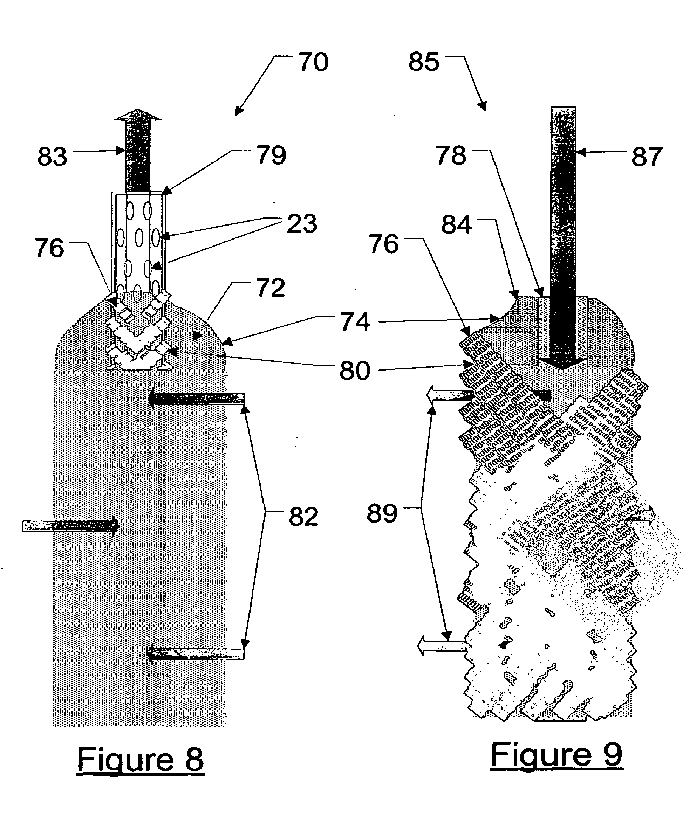

FIGURE 8 is a schematic elevational view, partly sectioned, which shows a composite filter 70 incorporating the two stages used in the Figure 7 embodiment, the oleophilic prefilter 72 being coaxial with but outside of the MC filter 76, and with the gas stream flow 82 proceeding radially inward toward the composite filter 70 axis. The oleophilic filtration media 74 may be wound or packed about MC filter 76 and held in place by retaining means such as string, and comprises the same materials as discussed for media 60 in Figure 6. The MC filter 76 is formed of a perforate walled hollow core 79 of stainless steel or the like, about which the metallic braid 80 is wound. The gas stream 82 flows in the directions shown by the arrows so that the oleophilic filter stage performs its desired prefiltration function. The gas stream, then devoid of the mercury, exits as shown at 83, where it is collected, for example by the entire system 70 being mounted in a surrounding tank or the like as in prior discussed embodiments,

In FIGURE 9 a schematic elevational view, partly sectioned, shows a composite filter system 85 incorporating the two stages used in the Figure 8 embodiment, but differing from the Figure 8 embodiment in that the oleophilic prefilter 84 is coaxial with but inside of the MC filter 76, and with the gas flow 87 being introduced to and then proceeding outwardly from the hollow axial portion of the perforated wall core 78. Braid 80 is therefore wound at the outside of the composite filter so that the gas stream being treated passes radially through the oleophilic prefilter 84 prior to reaching the MC filter 76, at which the mercury droplets are collected as previously described. The gas stream, then devoid of the mercury, exits as shown at 86, where it is collected, for example by the system 85 being mounted in a surrounding tank or the like, In both the embodiments of Figures 8 and 9 the mercury accumulating at the bottom portions of the wound braid 80 can then be collected, e.g. by the braid extending to a suitable collection point or vessel.

While the present invention has been set forth in terms of specific embodiments thereof, the instant disclosure is such that numerous variations upon the invention are now enabled to those skilled in the art, which variations yet reside within the scope of the present teaching. Accordingly, the invention is to be broadly construed and limited only by the scope of the claims now appended hereto.

## Claims

1. A method for separating droplets of finely aerosolized elemental mercury from a gaseous stream in which the droplets are dispersed, comprising:
contacting a metallic capillary surface with said gaseous stream, said metallic capillary surface being comprised of braided strands of copper having an integral surface deposition of gold, causing said droplets to deposit on said surface and by capillary action to coalesce with other of said droplets to form increasingly large drops of mercury, wherein said surface is oriented to allow the mercury drops to flow by gravitational forces and capillary action to the lowermost portion of said surface where it accumulates; and
collecting the accumulating mercury thereby separated from said gas stream.

2. A method in accordance with claim 1, wherein the mercury accumulating at the lowermost portion of said surface is collected by allowing it to fall into a collecting vessel.

3. A method in accordance with claim 2, wherein said gaseous stream is prefiltered before being contacted with said capillary surface to remove undesirable hydrocarbons and oily organic compounds dispersed as minute aerosolized particles or mists in the gaseous media.

4. A method in accordance with claim 3, wherein the prefiltration is effected by passing the gaseous stream through a gas pervious filtration media which has been infused with an absorption composition comprising a homogeneous thermal reaction product of an oil component selected from the group consisting of glycerides, fatty acids, alkenes and alkynes, and a methacrylate or acrylate polymer component, whereby the removed hydrocarbon and oily organic particles are immobilized at the media.

5. A method in accordance with claim 2, wherein the gas stream is generated by coal-fired power generation.

6. A filtration system for separating droplets of finely aerosolized elemental mercury from a gaseous stream in which the droplets are dispersed, comprising:
a metallic capillary surface being comprised of braided strands of copper having an integral surface deposition of gold;
means for contacting said metallic capillary surface with said gaseous stream, causing said mercury droplets to deposit on said surface and by capillary action to coalesce with other of said droplets to form increasingly large drops of mercury, wherein said capillary surface is oriented to allow the mercury drops to flow by gravitational forces and capillary action to the lowermost portion of said surface where it accumulates; and
means for collecting the accumulating mercury thereby separated from said gas stream.

7. A filtration system in accordance with claim 6, further including a vessel for receiving the accumulating mercury.

8. A method in accordance with claim 1 or a filtration system in accordance with claim 6 or 7, wherein the capillary surface is defined at the surface of a wick made of metal strands braided to form narrow interstices between the individual strands which thereby provide said capillary surface at the wick's exterior.

9. A filtration system in accordance with claim 6 or 8, wherein said braided strands are flattened into a ribbon which is wound on a tube with said strands all extending in the longitudinal direction along the tube, the capillary surface being defined at the surface of said wound ribbon; further including:
means to prefilter the gaseous stream before it is contacted with said capillary surface to remove undesirable hydrocarbons and oily organic compounds dispersed as minute aerosolized particles or mists in the gaseous media.

10. A filtration system in accordance with claim 9, wherein
said means for prefiltration comprises means for passing the gaseous stream through a gas pervious filtration media which has been infused with an absorption composition comprising a homogeneous thermal reaction product of an oil component selected from the group consisting of glycerides, fatty acids, alkenes and alkynes and a methacrylate or acrylate polymer component, whereby the removed hydrocarbon and oily organic particles are immobilized at the media;
said prefiltration means is positioned coaxially and surrounding said tube and said braid ribbon wound upon said tube; and
said tube has perforated walls, whereby the gaseous flow to be treated may be passed radially inward through said media and to the ribbon, thence into said tube interior from which it may flow having been cleaned of the aerosolized mercury and the hydrocarbon and oily organic particles.

11. A filtration system in accordance with claim 9, wherein said tube has perforated walls; further including:
means to prefilter said gaseous stream before it is contacted with said capillary surface to remove undesirable hydrocarbons and oily organic compounds dispersed as minute aerosolized particles or mists in the gaseous media;
wherein said means for prefiltration comprises means for passing said gaseous stream through a gas pervious oleophilic filtration media which has been infused with an absorption composition comprising a homogeneous thermal reaction product of an oil component selected from the group consisting of glycerides, fatty acids, alkenes and alkynes and a methacrylate or acrylate polymer component, whereby the removed hydrocarbon and oily organic particles are immobilized at the said oleophilic media;
wherein said braided strands are flattened into a ribbon, the capillary surface being defined at the surface of said ribbon which is wound on said tube with the said strands all extending in the longitudinal direction along the tube;
wherein the prefiltration means is positioned coaxially and surrounding said tube; and
wherein said braid ribbon is wound about the outside of the filtration media coaxially with said tube, whereby the gaseous flow to be treated may be passed to the interior of said tube, then radially outward through said oleophilic filtration media and to said ribbon, from which it may flow radially outward having been cleaned of the aerosolized mercury and the removed hydrocarbon and oily organic particles.

12. A filtration system in accordance with claim 6, further comprising:
a generally enclosed mercury filtration tank having an inlet for receiving said gaseous stream and an outlet for discharging the gaseous stream after the said mercury has been removed;
wherein said means for contacting said metallic capillary surface with said gaseous stream includes a filter positioned in said mercury filtration tank comprising a perforated wall tube wound with a metallic substrate having said metallic capillary surface;
means for flowing the gas stream entered into said tank through the said perforated wall of said tube and the wound substrate to effect contact of said metallic capillary surface of said substrate with said gaseous stream;
means for passing the gas stream having contacted said capillary surface to the said gas discharge outlet; and
wherein said tube and capillary surface are oriented to allow said mercury drops to flow by gravitational forces and capillary action to the gravitationally lowermost portion of said surface where it accumulates for said collecting means.

13. A filtration system in accordance with claim 12, including one or more of said filters in said mercury filtration tank.

14. A filtration system in accordance with claim 13, wherein the capillary surface is defined at the surface of a wick made of the gold plated metal strands braided to form narrow interstices between said individual strands which thereby provide said capillary surface at the wick's exterior, said wick comprising said wound substrate.

15. A method in accordance with claim 1 or a filtration system in accordance with claim 6 or 14, wherein said braided strands are flattened into a ribbon which is wound on a tube with said strands all extending in the longitudinal direction along said tube, said capillary surface being defined at the surface of said wound ribbon.

16. A filtration system in accordance with claim 15, further including
a collecting vessel external to said tank for receiving said accumulating mercury;
wherein said wick of said one or more filters in said mercury filtration tank is extended through an outlet of said tank to said vessel.

17. A filtration system in accordance with claim 16, wherein the gas stream includes undesirable hydrocarbons and oily organic compounds dispersed as minute aerosolized particles or mists in the gaseous media; further including:
means to prefilter the gaseous stream before it is contacted with said capillary surface to remove undesirable hydrocarbons and oily organic compounds dispersed as minute aerosolized particles or mists in the gaseous media.

18. A filtration system in accordance with claim 16, wherein said prefilter means are upstream of said mercury filtration tank.

19. A filtration system in accordance with claim 9 or 18, wherein said means for prefiltration comprises means for passing the gaseous stream through a gas pervious filtration media which has been infused with an absorption composition comprising a homogeneous thermal reaction product of an oil component selected from the group consisting of glycerides, fatty acids, alkenes and alkynes and a methacrylate or acrylate polymer component, whereby the removed hydrocarbon and oily organic particles are immobilized at the media.

20. A filtration system in accordance with claim 18, wherein
said mercury filtration tank is divided by a cross plate into an upper chamber above said plate and a lower chamber below said plate;
the gaseous stream inlet being in communication with one of said chambers, and the gaseous stream discharge outlet being in communication with the other;
said filters being in one of the two said chambers with the interior of said tube communicating with the other chamber, whereby the flow through said filter is either radially from the outside of said tube inwardly, or radially from the inside of said tube outward, depending on whether the interior of said tube or the exterior of said tube is the recipient of the upstream flow of the gaseous stream via said chamber in which the filter is resident.

21. A filtration system in accordance with claim 18, wherein said prefiltering means comprises:
a generally enclosed prefiltration tank having an inlet for receiving the gaseous stream and an outlet for discharging the gaseous stream after the hydrocarbons and oily organic compounds dispersed as minute aerosolized particles or mists in the gaseous media have been removed;
an oleophilic filter being positioned in said prefiltration tank;
means for flowing the gas stream entered into said prefiltration tank through said oleophilic filter;
means for passing the gas stream having contacted said oleophilic filter to said gas discharge outlet; and
means connecting the outlet flow from said prefiltration tank to the inlet of said mercury filtration tank.

22. A system in accordance with claim 21, wherein said means for prefiltration comprises means for passing the gaseous stream through a gas pervious oleophilic filtration media which has been infused with an absorption composition comprising a homogeneous thermal reaction product of an oil component selected from the group consisting of glycerides, fatty acids, alkenes and alkynes, and a methacrylate or acrylate polymer component, whereby the removed hydrocarbon and oily organic particles are immobilized at the oleophilic media.

## Patentansprüche

1. Verfahren zur Abscheidung von Tröpfchen fein aerosolisierten elementaren Quecksilbers aus einem Gasstrom, in dem die Tröpfchen dispergiert sind, mit:
Kontaktieren einer metallischen kapillaren Oberfläche mit dem Gasstrom, wobei die metallische kapillare Oberfläche aus geflochtenen Fäden aus Kupfer mit einer integralen Oberflächenbeschichtung aus Gold besteht, wodurch sich die Tröpfchen auf der Oberfläche ablagern und durch Kapillarwirkung mit anderen der Tröpfchen zusammenfließen, um größer werdende Tropfen aus Quecksilber zu bilden, wobei die Oberfläche so orientiert ist, dass die Quecksilbertropfen aufgrund von Gravitationskräften und Kapillarwirkung zum untersten Bereich der Oberfläche fließen und sich dort ansammeln können; und
Sammeln des angesammelten Quecksilbers, welches hierdurch von dem Gasstrom abgeschieden wird.

2. Verfahren nach Anspruch 1, wobei das sich im untersten Bereich der Oberfläche ansammelnde Quecksilber gesammelt wird, indem es in ein Sammelgefäß fallen kann.

3. Verfahren nach Anspruch 2, wobei der Gasstrom vorgefiltert wird, bevor er mit der kapillaren Oberfläche in Kontakt kommt, um unerwünschte Kohlenwasserstoffe und ölige organische Verbindungen zu entfernen, die als winzige aerosolisierte Partikel oder Nebel in dem Gasmedium dispergiert sind.

4. Verfahren nach Anspruch 3, wobei das Vorfiltern durchgeführt wird, indem der Gasstrom durch ein gasdurchlässiges Filtrationsmedium geführt wird, das mit einer Absorptionszusammensetzung infundiert wurde, die ein homogenes thermisches Reaktionsprodukt aus einem Ölbestandteil aufweist, der aus der Gruppe bestehend aus Glyceriden, Fettsäuren, Alkenen und Alkinen, und einem Methacrylat- oder Acrylat-Polymer-Bestandteil ausgewählt ist, wobei die entfernten Kohlenwasserstoffpartikel und öligen organischen Partikel auf dem Medium immobilisiert werden.

5. Verfahren nach Anspruch 2, wobei der Gasstrom durch kohlebefeuerte Stromerzeugung generiert wird.

6. Filtrationssystem zur Abscheidung von Tröpfchen fein aerosolisierten elementaren Quecksilbers aus einem Gasstrom, in dem die Tröpfchen dispergiert sind, mit:
einer metallischen kapillaren Oberfläche aus geflochtenen Fäden aus Kupfer mit einer integralen Oberflächenbeschichtung aus Gold,
einem Mittel zum Kontaktieren der metallischen kapillaren Oberfläche mit dem Gasstrom, wodurch sich die Tröpfchen auf der Oberfläche ablagern und durch Kapillarwirkung mit anderen der Tröpfchen zusammenfließen, um größer werdende Tropfen aus Quecksilber zu bilden, wobei die kapillare Oberfläche so orientiert ist, dass die Quecksilbertropfen aufgrund von Gravitationskräften und Kapillarwirkung zum untersten Bereich der Oberfläche fließen und sich dort ansammeln können; und
einem Mittel zum Sammeln des angesammelten Quecksilbers, welches hierdurch von dem Gasstrom abgeschieden wurde.

7. Filtrationssystem nach Anspruch 6, weiterhin mit einem Gefäß zum Aufnehmen des angesammelten Quecksilbers.

8. Verfahren nach Anspruch 1 oder Filtrationssystem nach Anspruch 6 oder 7, wobei die kapillare Oberfläche an der Oberfläche eines Dochts aus Metallfäden gebildet wird, die zum Bilden enger Lücken zwischen den einzelnen Fäden geflochten sind, die dadurch die kapillare Oberfläche am Äußeren des Dochts bereitstellen.

9. Filtrationssystem nach Anspruch 6 oder 8, wobei die geflochtenen Fäden zu einem Band abgeflacht sind, welches auf ein Rohr gewickelt ist, wobei sich alle Fäden in der Längsrichtung entlang des Rohrs erstrecken, wobei die kapillare Oberfläche an der Oberfläche des gewickelten Bands gebildet wird; weiterhin mit:
einem Mittel zum Vorfiltern des Gasstroms, bevor dieser mit der kapillaren Oberfläche in Kontakt kommt, um unerwünschte Kohlenwasserstoffe und ölige organische Verbindungen zu entfernen, die als winzige aerosolisierte Partikel oder Nebel in dem Gasmedium dispergiert sind.

10. Filtrationssystem nach Anspruch 9, wobei
das Mittel zum Vorfiltern ein Mittel zum Hindurchführen des Gasstroms durch ein gasdurchlässiges Filtrationsmedium aufweist, das mit einer Absorptionszusammensetzung infundiert wurde, die ein homogenes thermisches Reaktionsprodukt aus einem Ölbestandteil aufweist, der aus der Gruppe bestehend aus Glyceriden, Fettsäuren, Alkenen und Alkinen, und einem Methacrylat- oder Acrylat-Polymer-Bestandteil ausgewählt ist, wobei die entfernten Kohlenwasserstoffpartikel und öligen organischen Partikel auf dem Medium immobilisiert werden;
das Vorfiltrationsmittel koaxial und das Rohr umgebend positioniert und das geflochtene Band um das Rohr gewickelt ist; und
das Rohr perforierte Wandungen besitzt, wodurch der zu behandelnde Gasstrom radial nach innen durch das Medium und zu dem Band und folglich in das Innere des Rohrs geführt werden kann, von dem der Gastrom von dem aerosolisierten Quecksilber und den Kohlenwasserstoffpartikeln und öligen organischen Partikeln gereinigt abfließen kann.

11. Filtrationssystem nach Anspruch 9, wobei das Rohr perforierte Wandungen aufweist; weiterhin mit:
einem Mittel zum Vorfiltern des Gasstroms, bevor dieser die kapillare Oberfläche kontaktiert, um unerwünschte Kohlenwasserstoffe und ölige organische Verbindungen zu entfernen, die als winzige aerosolisierte Partikel oder Nebel in dem Gasmedium dispergiert sind;
wobei das Mittel zum Vorfiltern ein Mittel zum Hindurchführen des Gasstroms durch ein gasdurchlässiges ölanziehendes Filtrationsmittel aufweist, welches mit einer Absorptionszusammensetzung infundiert wurde, die ein homogenes thermisches Reaktionsprodukt aus einem Ölbestandteil aufweist, der aus der Gruppe bestehend aus Glyceriden, Fettsäuren, Alkenen und Alkinen, und einem Methacrylat- oder Acrylat-Polymer-Bestandteil ausgewählt ist, wobei die entfernten Kohlenwasserstoffpartikel und öligen organischen Partikel auf dem Medium immobilisiert werden;
wobei die geflochtenen Fäden zu einem Band abgeflacht sind, wobei die kapillare Oberfläche an der Oberfläche des gewickelten Bands gebildet wird, welches auf das Rohr gewickelt ist, wobei sich alle Fäden in der Längsrichtung entlang des Rohrs erstrecken;
wobei das Vorfiltrationsmittel koaxial und das Rohr umgebend positioniert ist; und
wobei das geflochtene Band um die Außenseite des Filtrationsmediums koaxial zu dem Rohr gewickelt ist, wodurch der zu behandelnde Gasstrom in das Innere des Rohrs und dann radial nach außen durch das ölanziehende Filtrationsmedium und zu dem Band gelangen kann, von dem der Gasstrom von dem aersolisierten Quecksilber und den entfernten Kohlenwasserstoffen und öligen organischen Partikeln gereinigt radial nach außen fließen kann.

12. Filtrationssystem nach Anspruch 6, weiterhin mit:
einem grundsätzlich abgeschlossenen Quecksilberfiltrationsbehälter mit einem Einlass zum Aufnehmen des Gasstroms und einem Auslass zum Abgeben des Gasstroms, nachdem das Quecksilber entfernt wurde;
wobei das Mittel zum in Kontakt Bringen der metallischen kapillaren Oberfläche mit dem Gasstrom einen in dem Quecksilberfiltrationsbehälter angeordneten Filter aufweist, wobei der Filter ein Rohr mit einer perforierten Wandung aufweist, wobei das Rohr mit einem metallischen Substrat mit der metallischen kapillaren Oberfläche umwickelt ist;
einem Mittel zum Fließen des in den Behälter eingedrungenen Gasstroms durch die perforierte Wandung des Rohrs und das gewickelte Substrat, um einen Kontakt der metallischen kapillaren Oberfläche des Substrats mit dem Gasstrom zu bewirken;
einem Mittel zum Hindurchführen des Gasstroms, der die kapillare Oberfläche kontaktiert hat, zu dem Gasabgabeauslass; und
wobei das Rohr und die kapillare Oberfläche so orientiert sind, dass sie den Quecksilbertropfen das Fließen aufgrund von Gravitationskräften und Kapillarwirkung zu dem gravitationsmäßig untersten Bereich der Oberfläche gestatten, wo sich diese für das Sammelmittel ansammeln.

13. Filtrationssystem nach Anspruch 12, mit einem oder mehreren der Filter in dem Quecksilberfiltrationsbehälter.

14. Filtrationssystem nach Anspruch 13, wobei die kapillare Oberfläche an der Oberfläche eines Dochts gebildet ist, der aus den goldplattierten Metallfäden besteht, die zum Bilden enger Lücken zwischen den einzelnen Fäden geflochten sind, wodurch die kapillare Oberfläche am Äußeren des Dochts bereitgestellt wird, wobei der Docht das gewickelte Substrat aufweist.

15. Verfahren nach Anspruch 1 oder Filtrationssystem nach Anspruch 6 oder 14, wobei die geflochtenen Fäden zu einem Band abgeflacht sind, welches auf ein Rohr gewickelt ist, wobei sich alle Fäden in der Längsrichtung entlang des Rohrs erstrecken, wobei die kapillare Oberfläche an der Oberfläche des gewickelten Bands gebildet wird.

16. Filtrationssystem nach Anspruch 15, weiterhin mit
einem außerhalb des Behälters angeordneten Sammelgefäß zum Aufnehmen des angesammelten Quecksilbers;
wobei der Docht des einen Filters oder der mehreren Filter in dem Quecksilberfiltrationsbehälter durch einen Auslass des Behälters mit dem Gefäß verlängert ist.

17. Filtrationssystem nach Anspruch 16, wobei der Gasstrom unerwünschte Kohlenwasserstoffe und ölige organische Verbindungen aufweist, die als winzige aerosolisierte Partikel oder Nebel in dem Gasmedium dispergiert sind; weiterhin mit
einem Mittel zum Vorfiltern des Gasstroms, bevor er mit der kapillaren Oberfläche in Kontakt kommt, um unerwünschte Kohlenwasserstoffe und ölige organische Verbindungen zu entfernen, die als winzige aerosolisierte Partikel oder Nebel in dem Gasmedium dispergiert sind.

18. Filtrationssystem nach Anspruch 16, wobei die Vorfiltermittel stromaufwärts des Quecksilberfiltrationsbehälters sind.

19. Filtrationssystem nach Anspruch 9 oder 18, wobei das Mittel zum Vorfiltern ein Mittel zum Hindurchführen des Gasstroms durch ein gasdurchlässiges Filtrationsmedium aufweist, welches mit einer Absorptionszusammensetzung infundiert wurde, die ein homogenes thermisches Reaktionsprodukt aus einem Ölbestandteil aufweist, der aus der Gruppe bestehend aus Glyceriden, Fettsäuren, Alkenen und Alkinen, und einem Methacrylat- oder Acrylat-Polymer-Bestandteil ausgewählt ist, wobei die entfernten Kohlenwasserstoffpartikel und öligen organischen Partikel auf dem Medium immobilisiert werden.

20. Filtrationssystem nach Anspruch 18, wobei
der Quecksilberfiltrationsbehälter durch eine Querplatte in eine obere Kammer oberhalb der Platte und eine untere Kammer unterhalb der Platte geteilt ist;
der Gasstromeinlass mit einer der Kammern kommuniziert und der Gasstromabgabeauslass mit der anderen Kammer kommuniziert;
die Filter in einer der zwei Kammern angeordnet sind, wobei das Innere des Rohrs mit der anderen Kammer kommuniziert, wodurch der Fluss durch den Filter entweder radial von außerhalb des Rohrs nach innen oder radial vom Inneren des Rohrs nach außen erfolgt, wobei dies davon abhängt, ob das Innere des Rohrs oder das Äußere des Rohrs der Empfänger des Stromaufwärtsflusses des Gasstroms über die Kammer ist, in der sich der Filter befindet.

21. Filtrationssystem nach Anspruch 18, wobei das Vorfiltermittel Folgendes aufweist:
einen grundsätzlich geschlossenen Vorfiltrationsbehälter mit einem Einlass zum Aufnehmen des Gasstroms und einem Auslass zum Abgeben des Gasstroms, nachdem die Kohlenwasserstoffe und ölige organische Verbindungen entfernt wurden, die als winzige aerosolisierte Partikel oder Nebel in dem Gasmedium dispergiert sind;
einem in dem Vorfiltrationsbehälter angeordneten ölanziehenden Filter;
einem Mittel zum Fließen des in den Vorfiltrationsbehälter eingedrungenen Gasstroms durch den ölanziehenden Filter;
einem Mittel zum Führen des Gasstroms, der den ölanziehenden Filter kontaktiert hatte, zu dem Gasabgabeauslass; und
einem Mittel zum Verbinden des Auslassstroms von dem Vorfiltrationsbehälter mit dem Einlass des Quecksilberfiltrationsbehälters.

22. System nach Anspruch 21, wobei das Mittel zum Vorfiltern ein Mittel zum Hindurchführen des Gasstroms durch ein gasdurchlässiges ölanziehendes Filtrationsmedium aufweist, das mit einer Absorptionszusammensetzung infundiert wurde, die ein homogenes thermisches Reaktionsprodukt aus einem Ölbestandteil aufweist, der aus der Gruppe bestehend aus Glyceriden, Fettsäuren, Alkenen und Alkinen, und einem Methacrylat- oder Acrylat-Polymer-Bestandteil ausgewählt ist, wobei die entfernten Kohlenwasserstoffpartikel und öligen organischen Partikel auf dem ölanziehenden Medium immobilisiert werden.

## Revendications

1. Procédé pour séparer des gouttelettes de mercure élémentaire finement aérosolisé d'un flux gazeux dans lequel des gouttelettes sont dispersées, comprenant:
la mise en contact d'une surface capillaire métallique avec ledit flux gazeux, ladite surface capillaire métallique étant constituée de filaments tressés de cuivre ayant un dépôt superficiel intégral d'or, amenant lesdites gouttelettes à se déposer sur ladite surface et, par action capillaire, a coalescer avec les autres desdites gouttelettes de manière à former des gouttes de mercure de plus en plus grosses, ladite surface étant orientée de manière à permettre que les gouttes de mercure s'écoulent sous l'effet des forces de gravitation et de l'action capillaire vers la partie la plus basse de ladite surface ou elles s'accumulent; et
la collecte du mercure accumulé séparé ainsi dudit flux gazeux.

2. Procédé selon la revendication 1, dans lequel le mercure s'accumulant dans la partie la plus basse de ladite surface est collecté en le laissant tomber dans un récipient de collecte.

3. Procédé selon la revendication 2, dans lequel ledit flux gazeux est préfiltré avant d'être mis en contact avec ladite surface capillaire afin d'éliminer les hydrocarbures et les composés organiques huileux indésirables dispersés sous forme de minuscules particules aérosolisées ou de brouillards dans le milieu gazeux.

4. Procédé selon la revendication 3, dans lequel la préfiltration est effectuée en faisant passer le flux gazeux à travers un milieu de filtration perméable aux gaz qui a été infusé avec une composition d'absorption comprenant un produit de réaction thermique homogène d'un composant huileux choisi dans le groupe constitué de glycérides, d'acides gras, d'alcènes et d'alcynes, et un composant de polymère de méthacrylate ou d'acrylate, de sorte que les particules d'hydrocarbures et de composés organiques huileux séparées soient immobilisées sur le milieu.

5. Procédé selon la revendication 2, dans lequel le flux de gaz est généré par génération d'électricité par combustion de charbon.

6. Système de filtration pour séparer des gouttelettes de mercure élémentaire finement aérosolisé d'un flux gazeux dans lequel les gouttelettes sont dispersées, comprenant:
une surface capillaire métallique étant constituée de filaments tressés de cuivre ayant un dépôt superficiel intégral d'or;
des moyens pour mettre en contact ladite métallique surface capillaire avec ledit flux gazeux, amenant lesdites gouttelettes à se déposer sur ladite surface et, par action capillaire, a coalescer avec les autres desdites gouttelettes de manière à former des gouttes de mercure de plus en plus grosses, ladite surface capillaire étant orientée de manière à permettre que les gouttes de mercure s'écoulent sous l'effet des forces de gravitation et de l'action capillaire vers la partie la plus basse de ladite surface ou elles s'accumulent; et
des moyens pour collecter le mercure accumulé séparé ainsi dudit flux de gaz.

7. Système de filtration selon la revendication 6, comprenant en outre un récipient pour recevoir le mercure accumulé.

8. Procédé selon la revendication 1 ou système de filtration selon la revendication 6 ou 7, dans lequel la surface capillaire est définie à la surface d'une mèche constituée de filaments métalliques tressés de manière à former les interstices étroits entre les filaments individuels qui constituent ainsi ladite surface capillaire à l'extérieur de la mèche.

9. Système de filtration selon la revendication 6 ou 8, dans lequel lesdits filaments tressés sont aplatis en ruban qui est enroulé sur un tube, lesdits filaments s'étendant tous dans la direction longitudinale le long du tube, la surface capillaire étant définie à la surface dudit ruban enroulée; comprenant en outre:
des moyens pour préfiltrer le flux gazeux avant qu'il soit mis en contact avec ladite surface capillaire afin d'éliminer les hydrocarbures et les composés organiques huileux indésirables dispersés sous forme de minuscules particules aérosolisées ou de brouillards dans le milieu gazeux.

10. Système de filtration selon la revendication 9, dans lequel
lesdits moyens de préfiltration comprennent des moyens pour faire passer le flux gazeux à travers un milieu de filtration perméable aux gaz qui a été infusé avec une composition d'absorption comprenant un produit de réaction thermique homogène d'un composant huileux choisi dans le groupe constitué de glycérides, d'acides gras, d'alcènes et d'alcynes, et un composant de polymère de méthacrylate ou d'acrylate, de sorte que les particules d'hydrocarbures et de composés organiques huileux séparées soient immobilisées sur le milieu;
lesdits moyens de préfiltration sont positionnés de façon coaxiale et autour dudit tube et dudit ruban tressé enroulé sur ledit tube; et
ledit tube comporte des parois perforées, de sorte que le flux gazeux à traiter puisse traverser radialement vers l'intérieur ledit milieu et atteindre le ruban, et par conséquent l'intérieur dudit tube depuis lequel il peut s'écouler après avoir été épuré du mercure aérosolisé et des particules d'hydrocarbures et de composés organiques huileux.

11. Système de filtration selon la revendication 9, dans lequel ledit tube à des parois perforées; comprenant en outre:
des moyens pour préfiltrer ledit flux gazeux avant qu'il soit mis en contact avec ladite surface capillaire afin d'éliminer les hydrocarbures et les composés organiques huileux indésirables dispersés sous forme de minuscules particules aérosolisées ou de brouillards dans le milieu gazeux;
dans lequel lesdits moyens pour préfiltration comprennent des moyens pour faire passer ledit flux gazeux à travers un milieu de filtration oléophile perméable aux gaz qui a été infusé avec une composition d'absorption comprenant un produit de réaction thermique homogène d'un composant huileux choisi dans le groupe constitué de glycérides, d'acides gras, d'alcènes et d'alcynes, et un composant de polymère de méthacrylate ou d'acrylate, de sorte que les particules d'hydrocarbures et de composés organiques huileux séparées soient immobilisées sur ledit milieu oléophile;
dans lequel lesdits filaments tressés sont aplatis en ruban, la surface capillaire étant définie à la surface dudit ruban qui est enroulée sur ledit tube, lesdits filaments s'étendant tous dans la direction longitudinale le long du tube;
dans lequel les moyens de préfiltration sont positionnés de façon coaxiale et entourant ledit tube; et
dans lequel ledit ruban tressé est enroulé autour de l'extérieur du milieu de filtration de façon coaxiale avec ledit tube, de sorte que le flux gazeux à traiter puisse passer à l'intérieur dudit tube, puis radialement à l'extérieur à travers ledit milieu de filtration oléophile et jusqu'audit ruban, depuis lequel il peut s'écouler radialement par l'extérieur après avoir été épuré du mercure aérosolisé et des particules d'hydrocarbures et de composés organiques huileux.

12. Système de filtration selon la revendication 6, comprenant en outre:
une cuve de filtration de mercure généralement confinée ayant une entrée pour recevoir ledit flux gazeux et une sortie pour décharger le flux gazeux après que ledit mercure ait été séparé;
dans lequel lesdits moyens pour mettre en contact ladite surface capillaire métallique avec ledit flux gazeux comprend un filtre positionné dans ladite cuve de filtration de mercure comprenant un tube à paroi perforée enroulé avec un substrat métallique ayant ladite surface capillaire métallique;
des moyens pour l'écoulement du flux de gaz entré dans ladite cuve à travers ladite paroi perforée dudit tube et le substrat enroulé afin d'établir le contact de ladite surface capillaire métallique dudit substrat avec ledit flux gazeux;
des moyens pour faire passer le flux de gaz ayant été mis en contact avec ladite surface capillaire vers ladite sortie de décharge de gaz; et
dans lequel lesdits tube et surface capillaire sont orientés de façon à permettre que lesdites gouttes de mercure s'écoulent sous l'effet des forces de gravitation et de l'action capillaire vers la partie la plus basse sur le plan gravitationnel de ladite surface où elle s'accumulent pour lesdits moyens de collecte.

13. Système de filtration selon la revendication 12, comprenant un ou plusieurs desdits filtres dans ladite cuve de filtration de mercure.

14. Système de filtration selon la revendication 13, dans lequel la surface capillaire est définie à la surface d'une mèche constituée des filaments métalliques plaqués d'or tressés de manière à former des interstices étroits entre lesdits filaments individuels qui constituent ainsi ladite surface capillaire à l'extérieur de la mèche, ladite mèche comprenant ledit substrat enroulé.

15. Procédé selon la revendication 1 ou système de filtration selon la revendication 6 ou 14, dans lesquels lesdits filaments tressés sont aplatis en ruban qui est enroulé sur un tube, lesdits filaments s'étendant tous dans la direction longitudinale le long dudit tube, ladite surface capillaire étant définie à la surface dudit ruban enroulé.

16. Système de filtration selon la revendication 15, comprenant en outre un récipient de collecte extérieure à ladite cuve pour recevoir ledit mercure accumulé; ladite mèche desdits un ou plusieurs filtres dans ladite cuve de filtration de mercure étant étendue à travers une sortie de ladite cuve vers ledit récipient.

17. Système de filtration selon la revendication 16, dans lequel le flux de gaz comprend des hydrocarbures et des composés organiques huileux indésirables dispersés sous forme de minuscules particules aérosolisées ou de brouillards dans le milieu gazeux; comprenant en outre:
des moyens pour préfiltrer le flux gazeux avant qu'il soit mis en contact avec ladite surface capillaire afin d'éliminer les hydrocarbures et les composés organiques huileux indésirables dispersés sous forme de minuscules particules aérosolisées ou de brouillards dans le milieu gazeux.

18. Système de filtration selon la revendication 16, dans lequel lesdits moyens de préfiltration sont en amont de ladite cuve de filtration de mercure.

19. Système de filtration selon la revendication 9 ou 18, dans lequel lesdits moyens pour préfiltration comprennent des moyens pour faire passer le flux gazeux à travers un milieu de filtration perméable aux gaz qui a été infusé avec une composition d'absorption comprenant un produit de réaction thermique homogène d'un composant huileux choisi dans le groupe constitué de glycérides, d'acides gras, d'alcènes et d'alcynes, et un composant de polymère de méthacrylate ou d'acrylate, de sorte que les particules d'hydrocarbures et de composés organiques huileux séparées soient immobilisées sur le milieu.

20. Système de filtration selon la revendication 18, dans lequel
ladite cuve de filtration de mercure est divisée par une plaque transversale en une chambre supérieure au-dessus de ladite plaque et une chambre inférieure au-dessous de ladite plaque;
l'entrée de flux gazeux étant en communication avec une desdites chambres, et la sortie de décharge de flux gazeux étant en communication avec l'autre;
lesdits filtres étant dans une desdites deux chambres, l'intérieur dudit tube communiquant avec l'autre chambre, de sorte que l'écoulement à travers ledit filtre soit orienté radialement depuis l'extérieur dudit tube vers l'intérieur, ou radialement depuis l'intérieur dudit tube vers l'extérieur, suivant que l'intérieur dudit tube ou l'extérieur dudit tube est le receveur de l'écoulement en amont du flux gazeux par l'intermédiaire de ladite chambre dans laquelle le filtre est situé.

21. Système de filtration selon la revendication 18, dans lequel lesdits moyens de préfiltration comprennent:
une cuve de préfiltration généralement confiné ayant une entrée pour recevoir le flux gazeux et une sortie pour décharger le flux gazeux après que les hydrocarbures et les composés organiques huileux dispersés sous forme de minuscules particules aérosolisées ou de brouillard dans le milieu gazeux aient été éliminés;
un filtre oléophile étant positionné dans ladite cuve de préfiltration;
des moyens pour l'écoulement du flux de gaz entré dans ladite cuve de préfiltration à travers ledit filtre oléophile;
des moyens pour faire passer le flux de gaz ayant été mis en contact avec ledit filtre oléophile vers ladite sortie de décharge de gaz; et
des moyens reliant l'écoulement de sortie provenant de ladite cuve de préfiltration à l'entrée de ladite cuve de filtration de mercure.

22. Système selon la revendication 21, dans lequel lesdits moyens pour préfiltration comprennent des moyens pour faire passer le flux gazeux à travers un milieu de filtration oléophile perméable aux gaz qui a été infusé avec une composition d'absorption comprenant un produit de réaction thermique homogène d'un composant huileux choisi dans le groupe constitué de glycérides, d'acides gras, d'alcènes et d'alcynes, et un composant de polymère de méthacrylate ou d'acrylate, de sorte que les particules d'hydrocarbures et de composés organiques huileux séparées soient immobilisées sur le milieu oléophile.
